# FASCICULE DE BREVET EUROPEEN

(11) **EP 0 738 378 B1**
(45) Date de publication et mention de la délivrance du brevet: **19.01.2000**
(21) Numéro de dépôt: 95940290.0
(22) Date de dépôt: 08.11.1995
(51) Int. Cl.: F16F 15/123, F16F 15/129

(54) **AMORTISSEUR DE TORSION, NOTAMMENT FRICTION D'EMBRAYAGE POUR VEHICULE AUTOMOBILE**
TORSIONSSCHWINGUNGSDÄMPFER, INSBESONDERE MIT REIBUNG DER KUPPLING FÜR KRAFTFAHRZEUGE
TORSIONAL DAMPER, PARTICULARLY A DRIVEN PLATE ASSEMBLY FOR A MOTOR VEHICLE CLUTCH

(30) Priorité: 08.11.1994 FR 9413514
(43) Date de publication de la demande: 23.10.1996
(73) Titulaire: VALEO, 75017 Paris (FR)
(72) Inventeur: HEMERYCK, Bruno, F-80160 Belleuse (FR); VANDENHENDE, Christian, F-80090 Amiens (FR); LOPEZ PEREZ, Carlos, E-Madrid 5 (ES); LEFEVRE, Gérard, F-80480 Vers-sur-Selle (FR)
(74) Mandataire: Gamonal, Didier
(86) Numéro de dépôt international: FR9501474
(87) Numéro de publication internationale: WO9614521

(56) Documents cités:
- EP-A- 0 322 208
- EP-A- 0 488 859
- EP-A- 0 579 554
- DE-U- 8 514 735
- GB-A- 2 254 398

## Description

La présente invention concerne les amortisseurs de torsion, notamment les frictions d'embrayage pour véhicules automobiles.

Un tel amortisseur est décrit par exemple dans le document FR-A-2 693 778 et comporte (figures 1 à 3) deux parties coaxiales montées mobiles l'une par rapport à l'autre à l'encontre de premiers organes élastiques à action circonférentielle 5, dits ci-après ressorts de forte raideur, et de premiers moyens de frottement 14,17,15 à action axiale.

L'une des parties comporte un élément d'entrée 1 solidaire de deux rondelles de guidage 2,3 reliées entre elles à fixation par des colonnettes 10.

L'autre partie comporte elle-même un voile 4 et un élément de sortie 7 montés mobiles l'un par rapport à l'autre à l'encontre de seconds organes élastiques 8 à action circonférentielle, dits ci-après ressorts de faible raideur, avec intervention de moyens d'engrènement à jeu 6 et de seconds moyens de frottement à action axiale 13,16,12.

Les moyens d'engrènement à jeu 6 limitent donc le débattement angulaire relatif entre le voile 4 et l'élément de sortie 7.

Plus précisément les rondelles de guidage 2,3 sont disposées de part et d'autre du voile 4 en étant d'orientation transversale tout comme le voile 4.

Les colonnettes 10, d'une part, traversent à jeu circonférentiel le voile 4 à la faveur d'échancrures 42 ménagées à la périphérie externe de celui-ci, et, d'autre part, solidarisent également l'élément d'entrée aux rondelles de guidage 2,3.

Cet élément d'entrée 1 est ici accolé à la face interne de la rondelle de guidage 2 et consiste en un disque de support portant, à sa périphérie externe, à fixation sur chacune de ses faces, des garnitures de frottement 11 éventuellement fractionnées en plots.

Les garnitures 11 sont destinées à être serrées entre les plateaux de pression et de réaction (non visibles) de l'embrayage en sorte que l'élément d'entrée est calé en rotation sur un arbre menant, le vilebrequin du moteur à combustion interne du véhicule dans le cas d'une application pour véhicule automobile.

L'élément de sortie 7 consiste en un moyeu 7 doté intérieurement de cannelures 71 pour sa liaison en rotation à un arbre mené, à savoir l'arbre d'entrée de la boîte de vitesses dans le cas d'une application pour véhicule automobile. Le couple moteur est ainsi transmis de l'élément d'entrée 1 à l'élément de sortie 7.

Les premiers organes élastiques 5 consistent en des ressorts à boudin montés par paire dans des logements 31,41, ici des fenêtres, ménagées en vis-à-vis respectivement dans les rondelles de guidage 2,3 et le voile 4.

Ici les paires de ressorts 5 sont montés sans jeu dans les fenêtres 31 des rondelles de guidage 2,3 et sans jeu pour certaines paires dans les fenêtres 41 du voile 4 et avec jeu pour les autres paires dans lesdites fenêtres 41.

Les ressorts 5 interviennent ainsi de manière étagée en étant plus raides que les seconds organes élastiques 8 consistant également en des ressorts à boudin, ici de plus faible raideur, pour notamment filtrer les vibrations dans le domaine du régime de ralenti du moteur du véhicule.

Les ressorts 5 de forte raideur sont destinés à filtrer les vibrations dans le régime de marche du véhicule.

Les moyens d'engrènement à jeu 6 comportent une denture ménagée à la périphérie interne du voile 4 et une denture complémentaire ménagée à la périphérie externe du moyeu de sortie 7 à la faveur d'une bride radiale 90 que présente ledit moyeu 7 radialement en saillie à sa périphérie externe.

Le moyeu 7 comporte ainsi des dents 61 de forme trapézoïdale engrenant à jeu circonférentiel avec des échancrures 62 du voile 4 et vice versa, ledit voile 4 présentant des dents 63 de forme trapézoïdale engrenant à jeu avec des échancrures 64 du moyeu 7 entouré par les rondelles de guidage 2,3 et le voile 4.

La bride 90 du moyeu 7 est pourvue d'échancrures 83 ouvertes radialement vers l'extérieur. Le voile 4 présente en correspondance à sa périphérie interne des échancrures 82 ouvertes radialement vers l'intérieur.

Les ressorts 8 de faible raideur sont montés ainsi dans les échancrures 82,83 en vis-à-vis et s'appuient sur les bords latéraux desdites échancrures 82,83 par l'intermédiaire de coupelles 81 à face dorsale en forme de dièdre pour épouser la forme desdits bords latéraux.

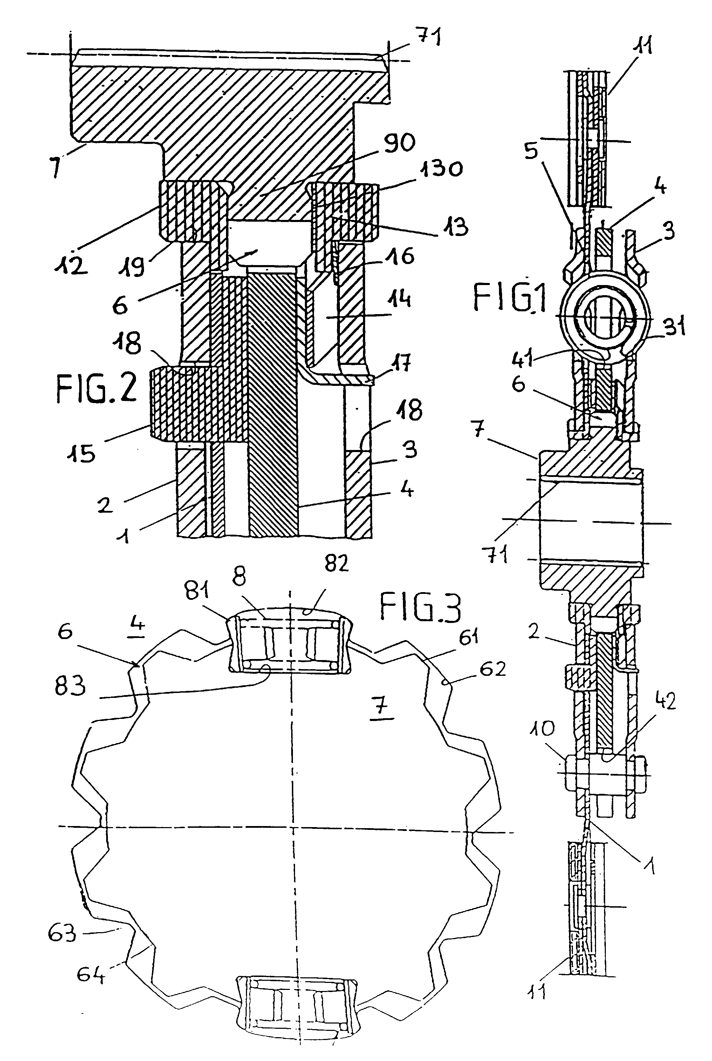

Ces coupelles 81 présentent chacune un téton de centrage pénétrant à l'intérieur d'un ressort 8 (figure 3) pour maintenir radialement lesdits ressorts.

Les premiers moyens de frottement comportent, d'une part, une rondelle de frottement 15, ici en matière synthétique, interposée axialement entre le voile 4 et la rondelle 2, plus précisément entre le voile 4 et le disque de support 1 et, d'autre part, une rondelle d'application 17, ici métallique, et une rondelle élastique à action axiale 14, ici une rondelle ondulée, interposées entre le voile 4 et la rondelle de guidage 3.

Les rondelles de guidage 2,3 sont ici semblables l'une à l'autre et présentent des ouvertures 18 radialement au-dessus de la bride 90 et des échancrures 19 à leur périphérie interne.

Les ouvertures 18 sont destinées au passage respectivement de pions appartenant à la rondelle 15 et de pattes appartenant à la rondelle 17.

Les rondelles 15 et 17 sont ainsi calées en rotation par coopération de formes respectivement avec les rondelles de guidage 2 et 3 en sorte que la rondelle 14 prend appui sur la rondelle de guidage 3 pour solliciter la rondelle 17 au contact du voile 4 et serrer la rondelle 15 entre le voile 4 et l'ensemble rondelle de guidage 2 - disque de support 1, les pions de la rondelle 15 traversant bien entendu, comme visible à la figure 2, le disque 1 accolé à la rondelle de guidage 2.

Les échancrures 19 sont prévues pour engrener avec des lunules, que présentent les paliers 12,13 à leur périphérie externe. Les paliers 12,13 sont ici en matière plastique en étant donc liés en rotation par coopération de formes respectivement à la rondelle de guidage 2 et à la rondelle de guidage 3.

Ces paliers sont interposés entre la périphérie interne des rondelles 2,3 et la périphérie externe du moyeu 7. Ils ont chacun une partie transversale venant directement ou indirectement au contact de la bride 90.

Ici le palier 12 est intercalé axialement entre la bride 90 et la rondelle de guidage 2, tandis qu'une rondelle de protection 130 est intercalée entre le palier 13 et la bride 90, ledit palier 13 étant soumis à l'action d'une rondelle élastique à action axiale 16, ici une rondelle élastique du type Belleville, prenant appui sur la rondelle de guidage 3.

Ainsi la rondelle 16 sollicite le palier 13 en direction de la bride 90 et permet un serrage de la partie transversale du palier 12 entre la bride 90 et la rondelle de guidage 2.

On notera que le palier 12 sert au centrage des rondelles de guidage 2,3.

Cette disposition donne satisfaction, néanmoins les échancrures 82,83 affectent les moyens d'engrènement à jeu 6 et affaiblissent donc la résistance du voile 4 et de la bride 90 du moyeu 7, en sorte qu'il n'est pas possible de monter un grand nombre de ressorts 8 de faible raideur.

En outre les moyens de frottement font apparaître de nombreuses pièces.

Pour rigidifier le voile 4 et le moyeu 7, et choisir librement le nombre de ressorts 8 de faible raideur, on peut songer à faire appel à une disposition du type de celle décrite dans le document FR-A-2 611 245.

Dans ce document il est prévu un préamortisseur de torsion monté entre le voile et l'une des rondelles de guidage. Ce préamortisseur comporte deux rondelles de guidage et un voile secondaire engrenant sans jeu avec la denture du moyeu de hauteur réduite à ce niveau, en sorte que les dentures du voile et du moyeu ne sont pas affaiblies.

Cette solution permet, en fonction des applications, d'implanter le nombre de ressorts de faible raideur voulu. Ainsi on peut implanter deux, ou plus de deux ressorts de faible raideur.

Néanmoins, la denture du moyeu obtenue par brochage affecte la bride du moyeu en majeure partie, en sorte qu'il apparaît des bavures et qu'il faut prévoir une plaque métallique de protection entre la bride du moyeu et le palier adjacent à ladite bride comme dans les figures 1 à 3.

Dans le document GB-A-2254 398, conforme au préambule de la revendication 1, le préamortisseur de torsion est logé dans le palier lié en rotation ou voile.

La Demanderesse s'est demandé s'il n'était pas possible de tirer parti d'un tel palier.

La présente invention a pour objet de pallier ces inconvénients et donc de créer, de manière simple et économique, un amortisseur de torsion à moyens d'engrènement à jeu rigide, tout en ayant un libre choix en ce qui concerne le nombre de ressorts de faible raideur et en tirant parti du palier de centrage des rondelles de guidage.

Le problème est résolue selon l'invention par la partie caractérisante de la revendication 1.

Grâce à l'invention, les ressorts de faible raideur sont implantés radialement au niveau des moyens d'engrènement à jeu et il n'est pas besoin de prévoir de plaque de protection pour protéger le palier de centrage des rondelles de guidage constitué par le palier selon l'invention.

On peut choisir librement le nombre de ressorts de faible raideur.

Dans une forme de réalisation la première zone est de hauteur réduite, la deuxième zone faisant saillie radialement vers l'extérieur par rapport à la première zone. Dans une autre forme de réalisation la première zone peut s'étendre légèrement en saillie radialement par rapport à la seconde zone.

Le palier selon l'invention permet un centrage du voile par rapport au moyeu tout en réduisant le nombre de pièces des moyens de frottement.

On appréciera que les moyens d'engrènement à jeu sont rigides puisqu'ils ne sont pas affectés par des échancrures de logement des ressorts de faible raideur.

Dans une forme de réalisation les organes élastiques de faible raideur sont logés dans des échancrures ouvertes ménagées radialement en vis-à-vis dans la première zone de la bride de l'élément de sortie et dans ledit palier annulaire.

Ainsi qu'on l'aura compris les échancrures ménagées dans le moyeu (l'élément de sortie) sont fermées par la deuxième zone de la bride du moyeu ou par le voile.

Cette disposition permet de simplifier l'amortisseur de torsion et de réduire le nombre de pièces de celui-ci.

En variante le palier loge en majeure partie les organes élastiques de faible raideur. Ces organes élastiques peuvent avoir alors une forme courbe et être montés en série.

Grâce à cette disposition on peut réduire l'encombrement axial de l'amortisseur de torsion et simplifier la rondelle de guidage.

Dans tous les cas on tire parti du palier.

Avantageusement le moyeu est obtenu par frittage ou tout autre procédé, par exemple le moulage, forgeage, frappe à froid ou à chaud, permettant d'éliminer les bavures.

La description qui va suivre illustre l'invention en regard des dessins annexés dans lesquels :
- la figure 1 est une vue en coupe axiale d'une friction d'embrayage de l'art antérieur ;
- la figure 2 est une vue à plus grande échelle de la partie centrale inférieure de la figure 1 ;
- la figure 3 est une vue schématique des moyens d'engrènement à jeu de la figure 1 ;
- la figure 4 est une demi-vue partielle en coupe axiale d'une friction d'embrayage selon l'invention ;
- la figure 5 est une vue partielle de l'élément de sortie selon la flèche 5 de la figure 4, les ressorts de faible raideur étant comprimés et avec représentation en pointillés des échancrures du palier ;
- les figures 6 et 7 sont des vues montrant d'autres formes des organes élastiques de faible raideur ;
- la figure 8 est une vue en coupe axiale d'une friction d'embrayage pour un autre exemple de réalisation de l'invention ;
- la figure 9 est une vue à plus grande échelle de la partie centrale de la figure 8 ;
- la figure 10 est une vue en coupe selon la ligne 10-10 de la figure 9 ;
- la figure 11 est une vue analogue à la figure 4 pour un troisième exemple de réalisation ;
- les figures 12 et 13 sont des vues en coupe selon les lignes 12-12 et 13-13 de la figure 11 ;
- la figure 14 est une vue analogue à la figure 12 pour un autre exemple de réalisation ;
- les figures 15 et 16 sont des vues analogues aux figures 11 et 12 pour un quatrième exemple de réalisation.

Par simplicité les éléments communs à l'art antérieur et à la présente invention seront affectés des mêmes signes de références. Dans les réalisations selon l'invention les éléments communs seront affectés des mêmes signes de références.

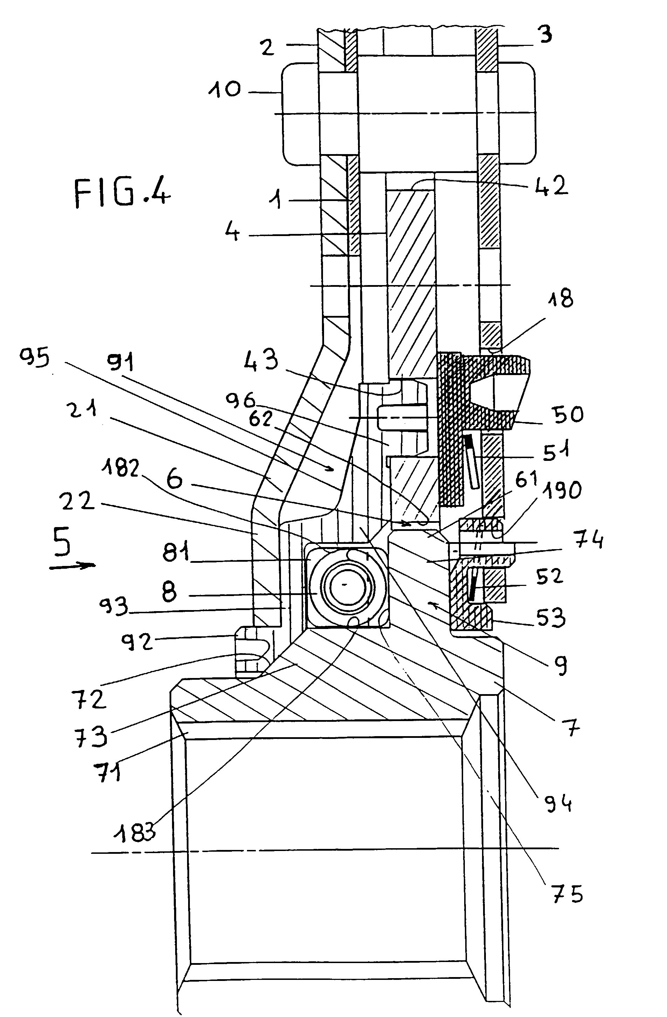

Dans la figure 4 les ressorts de forte raideur accouplent le voile 4 aux rondelles de guidage 2,3 comme à la figure 1 et l'amortisseur de torsion consiste en une friction d'embrayage à garnitures de frottement.

Ainsi à la figure 4 on voit en 2 et en 3 les rondelles de guidage reliées entre elles par les colonnettes de fixation 10 traversant à jeu circonférentiel des ouvertures 42 périphériques prévues dans le voile 4 doté à sa périphérie interne d'une denture engrenant à jeu avec une denture complémentaire prévue à la périphérie externe de l'élément de sortie de l'amortisseur en forme de moyeu 7 pour formation de moyens d'engrènement à jeu 6 comme à la figure 3, le moyeu 7 présentant, comme dans les figures 1 à 3, à sa périphérie externe, des dents 61 de forme trapézoïdale engrenant à jeu avec des échancrures 62 prévues à la périphérie interne du voile 4 et vice versa.

Ces rondelles 2,3 entourent le moyeu 7. De même le voile 4 entoure le moyeu 7 de forme annulaire.

Ainsi le disque de support 1, formant l'élément d'entrée de l'amortisseur de torsion, est accolé à la rondelle de guidage 2 en étant fixé à celle-ci à l'aide des colonnettes 10.

Ce disque porte à sa périphérie externe les garnitures de frottement destinées à être serrées entre les plateaux de pression et de réaction de l'embrayage de manière précitée.

Des premiers moyens de frottement à action axiale interviennent entre les deux parties coaxiales de l'amortisseur de torsion comportant respectivement les rondelles de guidage 2,3 et le voile 4 avec son moyeu de sortie 7.

Ces premiers moyens de frottement comportent, comme dans les figures 1 à 3, une rondelle de frottement 50 et une rondelle élastique 51 à action axiale interposées entre la rondelle de guidage 3 et le voile 4.

Ici la rondelle de frottement 50 est en matière plastique et comporte des pions pénétrant de manière complémentaire dans les ouvertures 18 de la rondelle de guidage 3 pour liaison en rotation de ladite rondelle de frottement 50 avec la rondelle de guidage 3.

L'organe élastique 51 consiste en une rondelle Belleville prenant appui sur la rondelle de guidage 3 pour action sur la rondelle de frottement 50 et sollicitation de celle-ci au contact du voile 4.

Les seconds moyens de frottement comportent une rondelle de frottement 53 également en matière plastique et une rondelle élastique à action axiale 52 interposée entre la rondelle de guidage 3 et l'une des faces d'une bride 9 annulaire du moyeu 7 pourvue à sa périphérie interne de cannelures 71 destinées à la liaison en rotation du moyeu 7 avec l'arbre d'entrée de la boîte de vitesses.

La rondelle de frottement 53 comporte à sa périphérie externe des pions engagés de manière complémentaire dans des ouvertures 190 de la rondelle de guidage 3 pour liaison en rotation par coopération de formes de la rondelle 53 avec la rondelle de guidage 3.

Les moyens élastiques 52 consistent en une rondelle Belleville prenant appui sur la rondelle de guidage 3 pour action sur la rondelle de frottement 53 et sollicitation de celle-ci au contact de la bride 9 du moyeu dans laquelle est formée la denture du moyeu 7 appartenant aux moyens d'engrènement à jeu 6.

Les rondelles 50,51 des premiers moyens de frottement entourent les rondelles 52,53 des seconds moyens de frottement.

Selon une caractéristique de l'invention un palier 91 de forme annulaire est interposé axialement entre le voile 4 et la périphérie interne de la rondelle de guidage 2. Ce palier est interposé radialement entre la périphérie interne de la rondelle de guidage 2 et la périphérie externe du moyeu 7.

Ainsi la rondelle élastique 51 permet, de manière décrite ci-après, un serrage du palier 91 entre le voile 4 et la rondelle de guidage 2 et la rondelle Belleville 52 permet un serrage du palier 91 entre le moyeu 7 et la rondelle de guidage 2.

Ainsi le palier 91, ici avantageusement en matière synthétique, telle que de la matière plastique renforcée par des fibres de verre, est commun aux deux moyens de frottement.

Plus précisément dans le but de réduire le nombre de pièces des moyens de frottement, tout en rigidifiant les moyens d'engrènement à jeu 6, et en ayant la possibilité d'augmenter le nombre de ressorts de faible raideur 8 des seconds organes élastiques à action circonférentielle, intervenant circonfé-rentiellement entre le voile 4 et l'élément de sortie 7 (le moyeu 7), l'élément de sortie 7 présente à sa périphérie externe, en saillie radiale vers l'extérieur, une bride étagée 9 comportant une première zone 73 et une deuxième zone 74 décalée axialement par rapport à la première zone, la deuxième zone 74 présentant à sa périphérie externe de manière continue la denture de l'élément de sortie 7 appartenant aux moyens d'engrènement à jeu 6, en sorte que les organes élastiques de faible raideur 8 à action circonférentielle sont logés au niveau de ladite première zone 73 selon l'invention dans des échancrures ouvertes ménagées dans le palier 91 calé en rotation sur le voile 4 en étant interposé d'une part, radialement entre l'une des rondelles de guidage 2 dite première rondelle de guidage et l'élément de sortie 7, et, d'autre part, axialement entre le voile 4 et ladite première rondelle de guidage 2. Ainsi dans la figure 4, les ressorts de faible raideur 8 sont logés dans une cavité délimitée par ledit palier 91 et ladite première zone 73 de la bride étagée 9 et les moyens d'engrènement à jeu 6.

Grâce à l'invention on peut augmenter la largeur circonférentielle des dents du moyeu 7 et du voile 4 puisque les échancrures 183,182 de logement des ressorts de faible raideur 8, pratiquées respectivement dans la zone 73 et dans le palier 91, sont décalées axialement par rapport aux moyens d'engrènement à jeu 6. Le voile 4 et le moyeu 7 sont donc rigidifiés, le voile 4 ayant une denture complémentaire continue à l'image du moyeu 7.

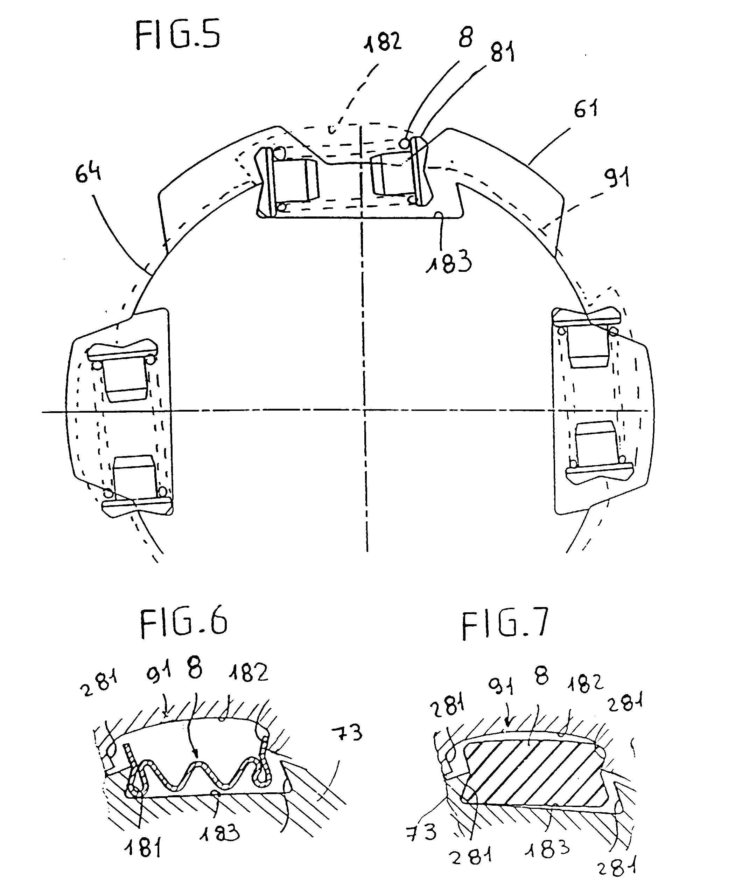

Dans cette figure 4 la deuxième zone 74 fait saillie radialement vers l'extérieur par rapport à la première zone 73 de hauteur réduite. Ainsi les dents 61 du voile 7 s'étendent radialement au-dessus des ressorts 8 (figure 5).

Les organes élastiques de faible raideur 8 sont logés dans des échancrures ouvertes ménagées radialement en vis-à-vis dans la première zone 73 de la bride 9 de l'élément de sortie et dans le palier 91.

L'échancrure 183 pratiquée dans la zone 73 étant ouverte radialement vers l'extérieur en direction de l'échancrure 182 du palier 91 ouverte radialement vers l'intérieur, c'est-à-dire vers le moyeu 7.

Ici le palier 91 est calé en rotation sur le voile 4 à l'aide d'une pluralité de pions 96 qu'il présente à sa périphérie externe et qui sont chacun engagés dans une ouverture 43 correspondante, ici en forme de trous ménagés dans le voile 4.

Ainsi le palier 91 est lié en rotation au palier 4 par coopération de formes.

On notera que la rondelle de frottement 50 obture les ouvertures 43 et que les moyens de frottement, notamment le palier annulaire 91 en matière plastique, sont implantés radialement en dessous des organes élastiques 5 de la figure 1.

Le palier 91 présente en allant de sa périphérie interne à sa périphérie externe respectivement une couronne 92 d'orientation axiale, une première paroi 93 globalement d'orientation transversale, une paroi 94 globalement d'orientation axiale et une deuxième paroi 95 globalement d'orientation transversale portant à sa périphérie externe les pions 96 ici répartis régulièrement circonférentiellement comme les ouvertures 43.

La couronne 92 forme un palier interposé radialement entre la périphérie interne de la rondelle de guidage 2 et une paroi de forme tronconique 72 délimitant la première zone 73.

L'extrémité dorsale de la couronne 92 est donc de forme tronconique pour épouser, de manière complémentaire, la forme de la paroi tronconique 72 du moyeu 7. Un jeu radial existe entre l'alésage interne de la couronne 92 et le moyeu 7.

La première paroi 93 s'étend transversalement au contact de la face interne de la rondelle de guidage 2. Plus précisément la rondelle de guidage 2 est élargie centralement et présente à sa périphérie interne une paroi 22 globalement transversale reliée par une paroi inclinée 21 à la partie principale d'orientation transversale de la rondelle de guidage 2.

Grâce à la paroi 21 un décalage de la paroi 22 est ainsi réalisé avec ménagement d'un espace pour loger le palier 91.

La première paroi 93 est en contact avec la face interne de la paroi 22. La paroi 94 forme globalement une entretoise axiale entre le voile 4 et la paroi 22 de la rondelle de guidage 2.

La deuxième paroi transversale 95 est en contact avec le voile 4 en étant ainsi décalée axialement par rapport à la première paroi 93.

On notera que cette deuxième paroi 95 est épaissie au niveau de sa zone de raccordement avec la paroi 94.

Ainsi la deuxième paroi s'évase en direction de sa périphérie externe.

C'est dans la paroi 94 que sont formées selon l'invention des échancrures 182 visibles en pointillés à la figure 5.

Ces échancrures 182 sont ménagées à la périphérie interne de la paroi axiale 94 en étant ouvertes radialement vers l'intérieur. Elles ont des bords latéraux inclinés.

En regard de chaque échancrure 182, la première zone 73 de la bride 9 du moyeu 7 présente une échancrure 183 à bords latéraux inclinés.

Cette échancrure 183 est ménagée à la périphérie externe d'orientation axiale de la première zone 73 en étant radialement ouverte vers l'extérieur en correspondance avec l'échancrure 182, sachant que la paroi axiale 94 entoure la première zone 73 à jeu radial.

Ici quatre ressorts 8 de faible raideur, du type à ressort à boudin, sont montés dans les échancrures 182,183. Ces échancrures étant réparties régulièrement circonférentiellement tout comme les ressorts 8. Bien entendu ce nombre dépend des applications.

Ces ressorts 8 s'appuient sur les bords latéraux inclinés des échancrures 182,183 par l'intermédiaire de coupelles d'appui 81 à face dorsale en forme de dièdre et à pions de centrage pénétrant chacun dans les ressorts 8 pour leur maintien radial.

Ainsi le palier 91 permet de centrer le voile 4 par rapport au moyeu 7 tout en centrant également la rondelle de guidage 2 (et donc les rondelles de guidage 2,3) grâce à sa couronne 92.

On notera que les coupelles 81 ont une largeur qui est fonction de la distance axiale entre la première paroi 93 et la deuxième zone 74 de la bride 9.

Ces coupelles ne sont pas sollicitées par le ressort 51 puisque la paroi 94 du palier 91 forme une entretoise entre le voile 4 et la rondelle de guidage 2.

Du fait que la couronne 92 présente une portion tronconique en contact avec la portion tronconique 72 du moyeu 7 lesdites coupelles 81 ne sont également pas serrées axialement par la rondelle élastique 52.

Cette rondelle élastique 52 a, de manière connue en soi, une charge telle qu'elle n'oblitère pas l'action des ressorts de faible raideur 8 appartenant aux seconds moyens élastiques à action circonférentielle de l'amortisseur de torsion.

La rondelle 51 développe une charge axiale qui tient compte de la raideur des ressorts 5 de la figure 1.

Cette rondelle 51 a un tarage plus élevé que celui de la rondelle 52.

On notera que la deuxième zone 74 de la bride 9 présente une face transversale 75 délimitant la cavité de logement des ressorts 8. Les échancrures 183 sont donc fermées par la face 75 adjacente de la deuxième zone 74.

On notera que les échancrures 64 de la denture du moyeu 7 sont implantées radialement au-dessus des échancrures 183 de la première zone 73 de la bride 9 et que le palier 91 et la rondelle de frottement 53 présentent des chanfreins de dégagement au niveau des moyens d'engrènement à jeu 6, la paroi 95 étant implantée globalement radialement au-delà du fond des échancrures de la denture du voile 4.

Ainsi un jeu axial existe entre le palier 91 et la deuxième zone 74, et la face de frottement de la rondelle 53 est décalée axialement par rapport à la périphérie externe de la rondelle 53. Cette face de frottement est implantée radialement en dessous de la denture de la deuxième zone 74 et frotte sur la face transversale adjacente de cette deuxième zone 74, qui offre ainsi une zone continue de frottement à la rondelle 53.

Ainsi, grâce à l'invention, les moyens de frottement 53,91 sont ménagés et on notera que la rondelle 52 est inclinée en direction du moyeu 7 pour tenir compte du décalage axial existant entre la périphérie interne et externe de la rondelle 53 à la faveur du chanfrein de dégagement précité.

Avantageusement le moyeu 7 est réalisé par frittage à l'aide de particules métalliques comprimées en sorte que l'on peut réaliser aisément les échancrures 183 et que l'on évite tout risque de bavure, sans avoir à effectuer des reprises d'usinage.

L'amortisseur de torsion selon l'invention fonctionne de la manière suivante :
- dans une première étape les rondelles de guidage 2,3 et le voile 4 forment un ensemble monobloc grâce aux organes élastiques 5 de forte raideur les accouplant.

Durant cette première phase le voile 4 se déplace angulairement par rapport au moyeu 7 avec compression des ressorts 8 (comme visible à la figure 5) et un frottement se produit entre la couronne 92 et la portée tronconique 72 du moyeu 7 ainsi qu'entre la rondelle 53 et la face transversale adjacente de la deuxième portion 74 de la bride puisque les rondelles de guidage sont solidaires du voile 4 de manière précitée.

Cette première phase se poursuit jusqu'à ce que les dents du voile 4 viennent en prise avec les dents 61 du moyeu 7 avec annulation du jeu des moyens d'engrènement à jeu 6 et limitation du débattement angulaire relatif entre le voile 4 et le moyeu 7.

A partir de ce moment le voile 4 devient solidaire en rotation du moyeu 7 et les ressorts 5 sont admis à être comprimés, les rondelles de guidage 2,3 se déplaçant angulairement par rapport au voile 4 et au moyeu 7. Cette deuxième phase se poursuit jusqu'au contact des entretoises avec le bord des ouvertures 42 du voile 4.

Ainsi, comme précédemment, un frottement a lieu entre la bride 9 du moyeu 7 et la rondelle 53 et entre la couronne 92 et la paroi 72 du moyeu 7.

Un frottement supplémentaire intervient. Ce frottement est dû à la rondelle de frottement 50, qui frotte contre le voile 4, et au palier 91 qui frotte par sa paroi transversale 93 contre la paroi transversale 22 de la rondelle de guidage 2 et ce sous l'action de la rondelle 51.

La rondelle de guidage 2 tourillonne alors autour de la couronne 92.

On notera qu'un jeu radial existe entre la périphérie interne de la rondelle 53 et la périphérie externe en vis-à-vis du moyeu 7.

Bien entendu durant cette deuxième phase les ressorts 8 restent bandés.

Ainsi on obtient un amortisseur de torsion économique avec un nombre réduit de pièces, le palier 91 étant aisément réalisable par moulage.

Cet amortisseur comporte deux dispositifs amortisseurs de torsion d'action étagée accouplant l'élément d'entrée 1 à l'élément de sortie 7, l'un de forte raideur, pour filtrer les vibrations dans le régime de marche du moteur, comportant les ressorts 5, les rondelles 2,3, le voile 4 et les premiers moyens de frottement, l'autre comportant, pour filtrer les vibrations dans le régime de ralenti du moteur, le palier 91, le moyeu 7, les ressorts 8 et les seconds moyens de frottement.

Bien entendu la présente invention n'est pas limitée à l'exemple de réalisation décrit.

En particulier, le disque 1 peut être solidaire directement d'un plateau lui-même fixé sur le vilebrequin du moteur à combustion interne.

En variante l'élément d'entrée 1 peut être constitué par un prolongement de la rondelle de guidage 2 d'orientation transversale tout comme le voile 4 et l'autre rondelle de guidage 3.

L'amortisseur de torsion est alors interposé entre le moteur du véhicule et une boîte de transmission de celui-ci, par exemple une boîte de transmission à courroie et poulie variable. L'élément de sortie 7 n'est pas forcément un moyeu cannelé intérieurement. Par exemple il peut être rapporté par vissage sur un plateau solidaire de l'arbre mené.

Les entretoises 10 peuvent être formées à la faveur de l'une des rondelles de guidage comportant à cet effet à sa périphérie externe des pattes d'orientation axiale formant des tenons engagés dans des mortaises correspondantes de l'autre rondelle de guidage en étant fixés à celle-ci par exemple par sertissage ou soudage.

Dans ce cas les entretoises entourent le voile sans contact avec celui-ci et la limitation du débattement angulaire entre le voile et les rondelles de guidage est réalisée par venue à spires jointives des spires des ressorts 5 de forte raideur.

Bien entendu on peut remplacer les rondelles 50,51 par les rondelles 17,14 de la figure 2. De même on peut remplacer la rondelle 53 par le palier 13 de la figure 1 monté alors à jeu radial par rapport au moyeu 7. De même la rondelle 52 peut consister en une rondelle élastique ondulée.

Les ressorts 8 peuvent consister en des ressorts ondulés, comme décrit dans le document FR-A-2 557 655, et comporter (figure 6) des éléments d'appui d'un seul tenant avec ledit ressort en sorte que les coupelles 81 sont supprimées. Dans ce cas les éléments d'appui 181 ont une forme de dièdre pour s'appuyer sur les bords latéraux inclinés 281 des échancrures 182,183.

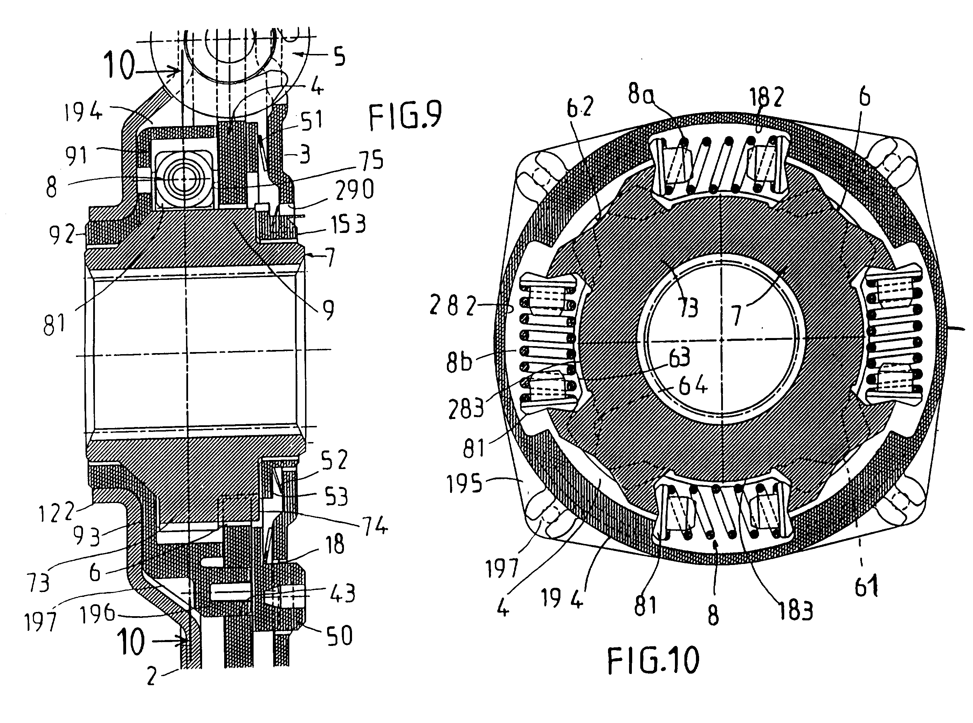

Bien entendu en variante le ressort 8 peut être du type de celui de la figure 10 du susmentionné document.

En variante (figure 7) les ressorts 8 peuvent consister en des blocs en matière élastique tel que de l'élastomère avec des extrémités circonférentielles en forme de dièdre pour appui direct ou indirect, par l'intermédiaire d'éléments d'appui, avec les bords latéraux des échancrures.

On appréciera que la paroi 72 favorise la réalisation des échancrures 183 et que le moyeu 7 peut être réalisé en variante par moulage, découpe au laser, forgeage, frappe à froid ou à chaud ou tout autre procédé permettant d'obtenir les zones 73,74.

Le palier 91 peut ne pas être conique, la couronne 92 étant alors dépourvue de paroi conique tout comme le moyeu 7. Dans ce cas la périphérie interne de la couronne 92 frotte contre une portée cylindrique en regard du moyeu 7 en étant calée axialement par un épaulement transversal délimitant la première zone 73 de la bride 9.

Le voile 4 peut présenter des -saillies axiales, obtenues par exemple par forgeage orbital, pour pénétrer dans des ouvertures complémentaires réalisées à la périphérie externe de la deuxième paroi transversale 95 du palier 91 et liaison en rotation avec celui-ci.

Les pions 96 peuvent pénétrer de manière complémentaire dans une encoche pratiquée à la périphérie interne des fenêtres 41 du voile 4 pour liaison en rotation du palier 91 avec le voile 4.

Selon les applications les ressorts 8 peuvent être disposés entièrement radialement en dessous des moyens d'engrènement à jeu 6.

On peut combiner les ressorts 8 avec par exemple alternance de ressorts à boudin et de blocs de matière élastique.

Dans tous les cas aucun contact n'a lieu entre les rondelles de guidage 2,3 et les moyens d'engrènement à jeu 6.

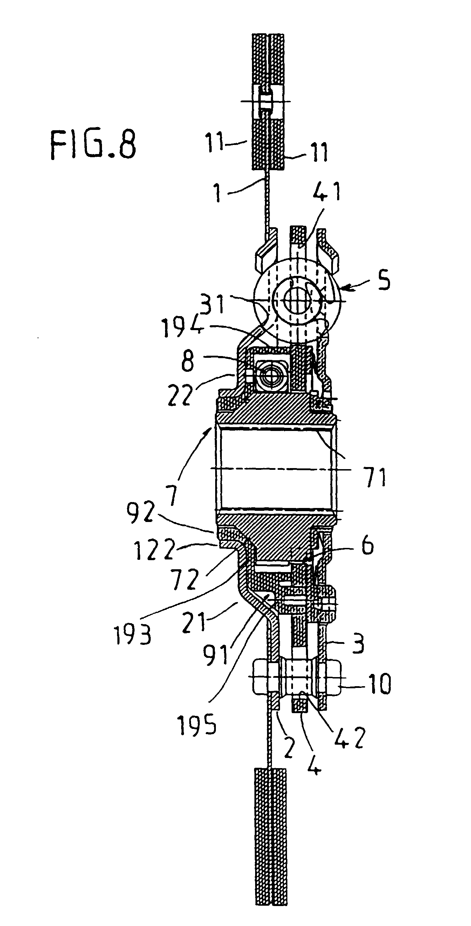

Bien entendu (figures 8 à 10) le disque 1 (l'élément d'entrée) peut être en contact avec la face externe de la rondelle de guidage 2 en étant fixé à celle-ci par les colonnettes 10.

Dans ces figures les éléments communs à ceux des figures 4 à 7 sont affectés des mêmes signes de références.

On notera que la rondelle de guidage 2 présente, pour un meilleur centrage, à sa périphérie interne un rebord annulaire d'orientation axiale 122 en contact avec la périphérie externe de la couronne 92 du palier 91, doté également d'une première paroi transversale 93 prolongée à sa périphérie externe par une paroi 194 d'orientation axiale faisant entretoise entre la rondelle de guidage 2 et le voile 4, la première paroi 93 étant en contact avec la paroi 22 de la rondelle 2. Le palier 91 est de forme annulaire en étant en matière plastique.

Ici la paroi 194 présente des échancrures 182,282 pour le logement des ressorts 8 de faible raideur. Ces échancrures 182,282 ont des longueurs circonférentielles différentes, de même que les échancrures 183,283 pratiquées dans la zone 73 de la bride 9 pour logement des ressorts 8.

Plus précisément, grâce à l'invention, les ressorts 8 peuvent être d'action étagée et comporter par exemple deux ressorts 8a, ici à boudin, diamétralement opposés et montés sans jeu circonférentiel par l'intermédiaire des coupelles 81 dans les échancrures 182,183 ménagées radialement en vis-à-vis respectivement dans la paroi 194 du palier 91 et dans la zone 73 comme dans les figures 4 à 7.

Deux autres ressorts 8b, ici à boudin, diamétralement opposés et alternant avec les ressorts 8a de manière régulière, sont montés sans jeu dans les échancrures 283, ouvertes radialement vers l'extérieur, réalisées dans la zone 73 et avec jeu circonférentiel dans les échancrures 282, ouvertes radialement vers l'intérieur, réalisées dans la paroi 94 du palier 91, plus précisément à la périphérie interne de celle-ci.

Les ressorts 8b sont plus longs et plus raides que les ressorts 8a. Ils interviennent en différé par rapport aux ressorts 8a, après rattrapage du jeu entre les bords circonférentiels des échancrures 282 et les coupelles 81 à face dorsale en forme de dièdre.

On peut donc, grâce à l'invention, sans affaiblissement mécanique du voile 4 et du moyeu 7, monter des ressorts 8a,8b d'action étagée pour mieux filtrer les vibrations dans le domaine de ralenti du moteur du véhicule. Ces ressorts sont montés donc par série dans les échancrures 182,183 et 282,283.

On peut également réaliser un sous-ensemble palier 91 - ressorts 8a,8b - coupelle 81 - voile 4 en emmanchant à force les pions, ici numérotés en 196, du palier 91 dans les ouvertures associées 43 du voile 4.

Les pions 196 sont dans ce cas portés par des oreilles 195 s'étendant à la périphérie externe de la paroi 194 et ce transversalement. Les oreilles 195 ne sont pas en contact avec le voile 4 (figure 9). Elles sont implantées au niveau des zones épaisses de la paroi 194 (figure 10) à proximité du voile 4.

Des nervures 197 de renforcement sont prévues pour relier l'arrière des oreilles à la paroi 194. Les nervures 197 s'étendent parallèlement à la paroi inclinée 21 de la rondelle 2.

On notera que la première zone 73 s'étend ici radialement en saillie par rapport à la seconde zone 74 au niveau des ressorts 8a,8b.

On notera que la rondelle 53 de frottement est épaissie localement en 153 pour formation de bossage s'engageant de manière complémentaire dans des encoches 290 ménagées à la périphérie interne de la rondelle de guidage 3.

La rondelle de frottement 53 est ainsi liée en rotation à la rondelle de guidage 3.

Comme dans les figures 4 à 7 la rondelle de frottement 50 masque les ouvertures 43.

Dans les figures 8 à 10 le palier 91 présente donc une seconde paroi globalement d'orientation transversale fractionnée en oreilles 195.

Dans les figures 8 à 10 les ressorts 8a,8b s'étendent radialement au-dessus du fond des échancrures 64 du moyeu 7, implantés sur la même circonférence que le fond des échancrures 183,283 (figure 10). Ils sont logés dans une cavité délimitée par la première zone 73 et les moyens d'engrènement à jeu 6 de la bride 9 étagée, plus précisément par les dents 63 du voile 4.

A la figure 5 le fond des échancrures 183,283 s'étend radialement en dessous du fond des échancrures 64 du voile 7, les ressorts 8 sont donc implantés en partie en dessous des moyens d'engrènement à jeu 6. Cela provient du fait que la zone 74 fait saillie radialement vers l'extérieur par rapport à la zone 73.

Dans tous les cas les organes élastiques de faible raideur 8 sont implantés au plus près de l'axe de symétrie axial de la friction d'embrayage et sont donc moins sensibles à la force centrifuge. Ces organes 8 sont retenus radialement par la paroi axiale 94,194 du palier 91. Ce palier 91, par sa paroi 93, masque lesdits organes 8 et empêche que les coupelles 81 ne s'échappent des échancrures 183,283.

On notera que dans le mode de réalisation des figures 8 à 10 les dents 63 du voile 4 sont en regard des ressorts 8a,8b pour la position de repos de l'amortisseur.

A la figure 5, les ressorts 8 sont en regard au niveau de leur extrémité circonférentielle des dents 61 du moyeu 7 pour la position de repos de l'amortisseur.

Dans tous les cas les coupelles 81 ne peuvent s'échapper.

Bien entendu on peut également utiliser la paroi axiale 94,194 du palier 91 pour simplifier la rondelle de guidage 2 et notamment supprimer la paroi inclinée 21 de celle-ci.

On peut également tirer parti du palier 91 pour réduire l'encombrement axial de l'amortisseur de torsion.

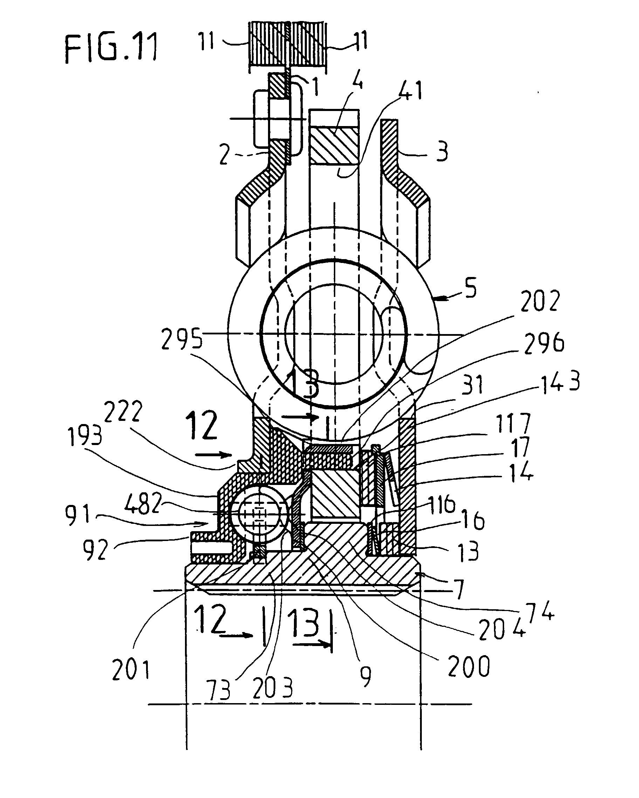

Ainsi dans les figures 11 à 14, dans lesquelles les éléments identiques à ceux des figures précédentes seront affectés des mêmes signes de références, le palier 91, de forme annulaire et en matière plastique, présente d'un seul tenant, ici par moulage en allant de sa périphérie interne à sa périphérie externe une couronne d'orientation axiale 92, une première paroi 193 globalement d'orientation transversale, une paroi 294 d'orientation axiale dirigée vers le voile 4 et une deuxième paroi 295 globalement d'orientation transversale portant des pions 296.

La couronne 92, dirigée axialement en sens inverse par rapport à la paroi axiale 294, est par sa périphérie interne en contact intime avec la périphérie externe du moyeu 7.

La première paroi 193 et la paroi axiale 294 sont échancrées en 482 pour logement des organes élastiques de faible raideur consistant ici en des ressorts 480,481 de forme courbe montés en série de manière décrite ci-après.

L'échancrure 482 a globalement une forme semi-circulaire pour logement desdits ressorts 480,481 ici en forme de ressorts à boudin. Elle est ouverte en direction du voile 4.

La périphérie externe de la paroi axiale 294 est en contact intime avec la périphérie interne de la rondelle de guidage 2, plus précisément avec l'alésage interne d'un rebord annulaire d'orientation axiale 222, dirigé en direction opposée au voile 4, que présente la rondelle de guidage 2 à sa périphérie interne. Bien entendu la paroi axiale 294 a une forme annulaire.

Ainsi le palier 91, grâce à sa couronne 92 et sa paroi 294, permet de centrer la rondelle de guidage 2 tout en simplifiant celle-ci, la présence de la zone inclinée référencée en 21 dans les figures 4 à 10 n'étant plus nécessaire.

Dans ce cas, la paroi 193 ne fait plus office de rondelle de frottement comme dans les figures 4 à 10. Par contre c'est la deuxième paroi 295 qui fait office de rondelle de frottement, ladite paroi 295 étant admise à frotter contre la face interne de la rondelle de guidage 2.

Le palier 91 fait saillie axialement par rapport au rebord 222. Ce palier 91 constitue donc une entretoise radiale, grâce à sa paroi 93, entre le moyeu 7 et la rondelle de guidage 2, et les ressorts 480,481 sont montés dans une cavité délimitée par la première zone 73, la seconde zone 74 (les moyens d'engrènement à jeu 6) et le palier 91 masquant lesdits ressorts 480,481.

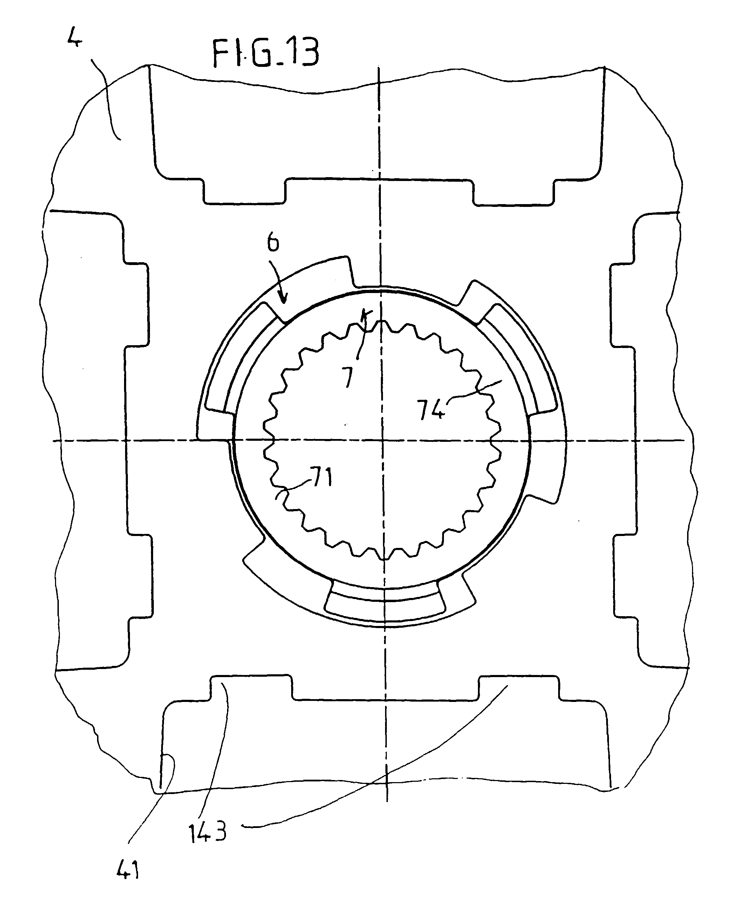

Comme dans les figures précédentes la zone 74 présente à sa périphérie externe, de manière régulière (figure 13), une denture femelle, tandis que le voile 4 présente à sa périphérie interne une denture mâle pénétrant à jeu dans la denture femelle du moyeu 7 pour création des moyens d'engrènement à jeu 6.

On notera qu'ici les dents et les échancrures des moyens d'engrènement à jeu 6 sont en forme de secteur annulaire.

La zone 74 est donc dépourvue d'échancrure de logement pour les ressorts de faible raideur.

La zone 73 présente à son extrémité axiale voisine de la couronne 92 un changement de diamètre formant un épaulement pour caler axialement un voile secondaire 201.

Dans l'autre sens axial le voile 201 est calé axialement par rabattement de matière (sertissage) de l'extrémité axiale libre de la première zone 73 d'épaisseur réduite par rapport à la deuxième zone 74.

Des moyens d'engrènement sans jeu 160, formant moyen de liaison en rotation par coopération de formes, interviennent entre la périphérie interne du voile secondaire 201 et la périphérie externe en regard de la première zone 73.

Ainsi le voile 201 présente à sa périphérie interne des échancrures peu profondes dans lesquelles pénètrent de manière complémentaire des dents saillantes radialement issues de la périphérie externe du moyeu 7.

Ainsi le voile secondaire 201 est lié en rotation au moyeu 7 par lesdits moyens d'engrènement sans jeu 160. Ce voile 201 est calé également axialement sur le moyeu 7 de manière précitée en sorte que ce voile secondaire 201 est solidaire du moyeu 7.

Les moyens d'engrènement sans jeu 160 sont distincts des moyens d'engrènement à jeu 6 en étant implantés radialement en dessous desdits moyens d'engrènement à jeu 6.

Axialement les moyens d'engrènement sans jeu 160 sont positionnés entre les zones 93 et 295 du palier 91.

Le voile 201 est propre à agir sur les ressorts 480,481 symétriquement comme visible à la figure 11.

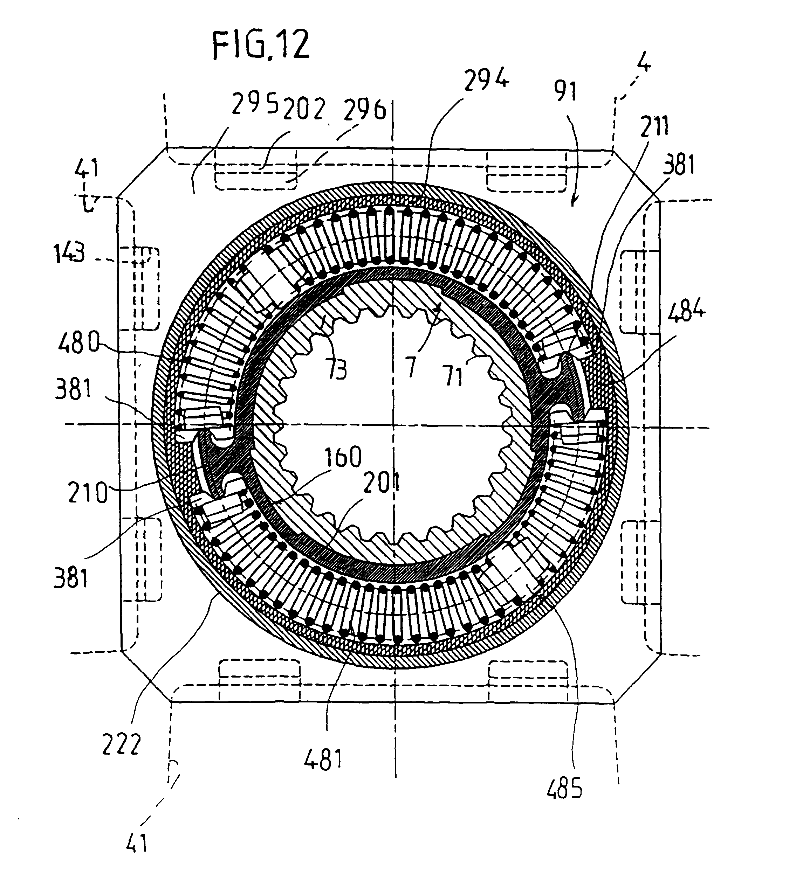

Plus précisément le voile 201 présente en saillie radiale à sa périphérie externe des bras 210 répartis régulièrement circonfé-rentiellement (figure 12). Ces bras 210 sont prolongés circonfé-rentiellement par des doigts 211 propres à agir centralement sur la face dorsale de coupelles 381 servant d'appui aux extrémités circonférentielles des ressorts 480,481.

Ces coupelles 381 présentent un pion de centrage pénétrant dans les extrémités circonférentielles des ressorts 480,481 ici de forme courbe. Ces ressorts 480,481 peuvent être précintrés.

Les échancrures 483, en forme de creusure, laissent apparaître des bossages d'appui 484 pour les coupelles 381 présentant centralement une empreinte pour coopérer avec les doigts 211 des bras 210.

Le voile 201 est disposé axialement entre la paroi 193 et une pièce métallique 200 en forme de flasque présentant localement des emboutis 203 en regard des bossages 484 pour appui des coupelles 381.

Le flasque 200 est en contact avec la deuxième zone 74, plus précisément avec la face transversale de celle-ci, par l'intermédiaire d'une rondelle 204. A sa périphérie externe le flasque 200 présente des pattes axiales 202 engagées circonfé-rentiellement de manière complémentaire dans les ouvertures 143 prévues dans le voile 4.

Les pattes 202 sont obtenues par découpe et pliage de la périphérie externe du flasque 200, ici métallique en tôle emboutie.

Au niveau de la zone de pliage des pattes 202 il est créé une ouverture pour passage des pions 296 du palier 91. Ces pions 296 sont en contact par leur périphérie interne avec le fond du passage 143.

Ainsi le palier 91 permet un centrage du voile 4 par rapport au moyeu 7, le palier 91 permet, grâce à sa deuxième zone 295 rognée à l'extérieur pour ne pas interférer avec les ressorts 5, de serrer le flasque 200 au contact du voile 4.

Ainsi la portion axiale 294 forme toujours une entretoise axiale entre le voile 4 et la rondelle de guidage 2 avec intervention du flasque 200.

Les doigts 296 peuvent traverser un trou pratiqué dans le flasque 200 au niveau de ses pattes 202, en sorte que les pattes 202 sont uniques et s'étendent circonférentiellement de manière complémentaire chacune dans l'ouverture 143.

En variante les doigts 296 traversent une échancrure ouverte vers l'extérieur réalisée dans le fiasque 200. Dans ce cas les pattes 202 sont fractionnées, chacune venant en contact avec le bord concerné de l'ouverture 143. Bien entendu les doigts 296 peuvent pénétrer circonférentiellement de manière complémentaire dans les ouvertures 143.

On voit, grâce à ce type d'assemblage, qu'il est possible d'obtenir un grand nombre de réalisations.

Ici les passages 143 sont réalisés dans les bords inférieurs des fenêtres 41 comme visible par exemple à la figure 12.

Il est créé ainsi un préamortisseur simplifié à ressort courbe 480,481 faisant appel au palier 91.

On notera que le rebord 222 constitue une frette de renforcement pour la paroi 294, l'axe de symétrie radial des ressorts 480,481 étant dans le plan de l'extrémité interne de la rondelle de guidage 2. Ainsi la paroi 294 peut être mince au niveau du rebord 222.

On obtient donc une solution très compacte du point de vue radial et axial avec une rondelle de guidage 2 de forme simple.

L'autre rondelle de guidage 3 a également une forme simple comme dans les figures 1 à 3 des dispositifs de frottement sont interposés entre la rondelle de guidage 3 et le voile 4.

Ces dispositifs comportent la rondelle élastique 14, la rondelle d'application 17 portant à solidarisation une rondelle de frottement 117 destinée à frotter contre le voile 4.

Radialement en dessous de ce premier dispositif de frottement on trouve le dispositif de frottement associé aux ressorts 480,481 et comportant comme dans les figures 1 à 3 une rondelle 13, une rondelle élastique 16 prenant appui ici sur une rondelle de protection métallique 116.

On notera que par rapport à la figure 2 on a inversé le sens de la position de la rondelle 13 et de la rondelle 16.

Bien entendu ces dispositifs de frottement à action axiale peuvent avoir la forme de ceux des figures 4 à 10.

Suivant une caractéristique les ressorts 480,481 sont montés en série.

Plus précisément, entre deux bras consécutifs 210 du voile 201, on trouve une coupelle d'appui 381, un ressort 480, une pièce entretoise 485, un ressort 481 et une coupelle 381.

L'entretoise 485 forme une coupelle secondaire d'appui pour les extrémités circonférentielles concernées des ressorts 480,481. Plus précisément elle est en forme de disque annulaire présentant sur chacune de ses faces des pions pénétrant dans les ressorts à boudin 480,481.

Le ressort 480 est plus court que le ressort 481 et moins raide que celui-ci.

Ainsi lors du débattement angulaire relatif entre le voile 4 et le moyeu 7 dans une première phase on vient comprimer les ressorts 480 jusqu'à ce que ceux-ci viennent à bloc, c'est-à-dire à spires jointives, ensuite on comprime les ressorts 481 jusqu'à l'annulation du jeu des moyens d'engrènement à jeu 6.

Durant ce mouvement relatif entre le voile 4 et le moyeu 7, la couronne 92 est admise à frotter contre le moyeu 7 et aucun mouvement relatif ne se produit entre la rondelle de guidage 2 et le palier 91 car les rondelles de guidage 2,3 forment un bloc par l'intermédiaire des ressorts 5 de raideur nettement plus forte que les ressorts 480,481.

Après annulation des moyens d'engrènement à jeu 6 un mouvement relatif se produit entre le palier 91 et la rondelle de guidage 2 car ledit palier 91 est calé en rotation sur le voile via les pattes 202 ou les pions 296.

Dans ce cas un frottement se produit entre la rondelle de guidage 2 et les parois 295 et 294.

Bien entendu lors du mouvement relatif entre le voile 4 et le moyeu 7, les moyens de frottement 13,16,116 interviennent alors que les moyens de frottement 14,17,117 sont inactifs et deviennent actifs par la suite lors du mouvement relatif entre le voile 4 et les rondelles de guidage 2,3, c'est-à-dire après annulation du jeu des moyens d'engrènement 6.

La rondelle élastique 14 permet donc de serrer axialement la paroi 295 et le flasque 200 entre le voile 4 et la rondelle de guidage 2.

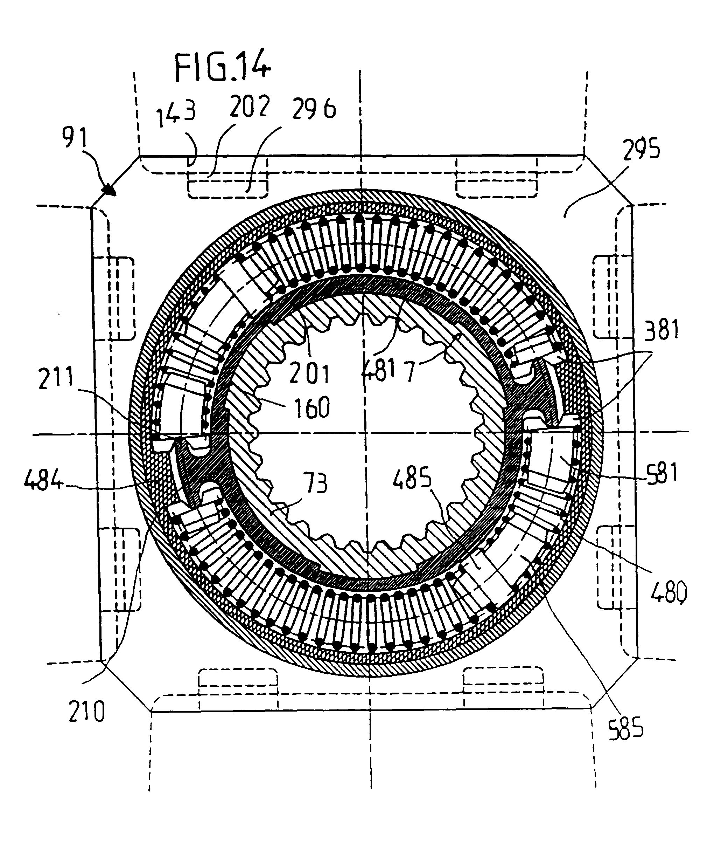

Bien entendu les ressorts 480 peuvent ne pas venir à spires jointives comme montré dans la figure 14. Dans ce cas une série des coupelles 381 est modifiée et présente un doigt arqué 581 s'engageant dans le ressort 480.

La pièce entretoise 485 présente aussi un doigt arqué 585 en regard du doigt 581.

Les coupelles 381 associées aux ressorts 480 ne sont pas modifiées.

Ainsi lors du mouvement relatif entre le voile 201 et le palier 91 les doigts arqués 585 et 581 sont admis à venir en contact l'un avec l'autre pour limiter la compression des ressorts 480 et ensuite comprimer les ressorts 481.

Dans tous les cas on obtient des ressorts de faible raideur à deux étages. Bien entendu on peut encore simplifier l'amortisseur.

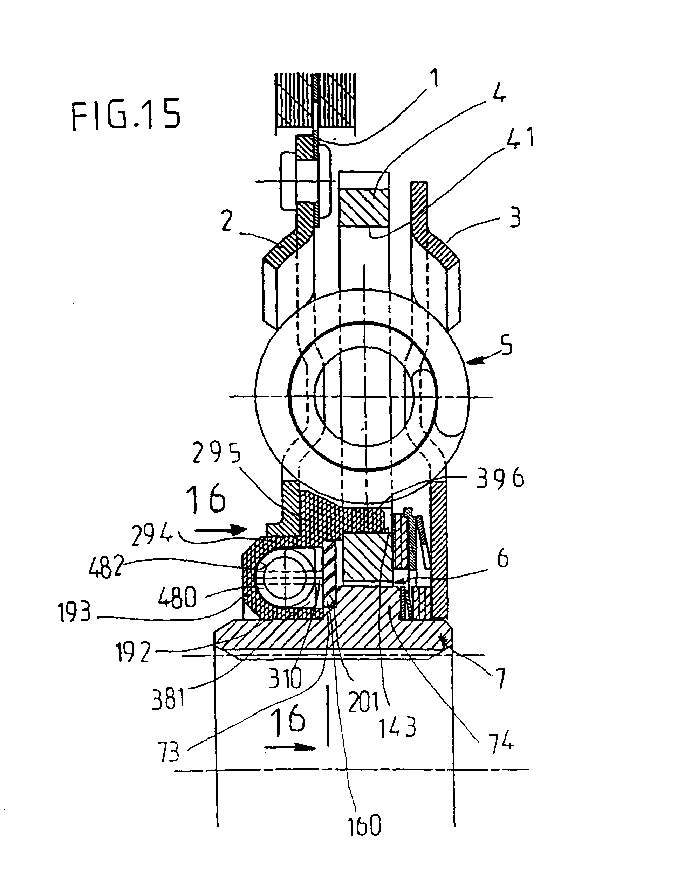

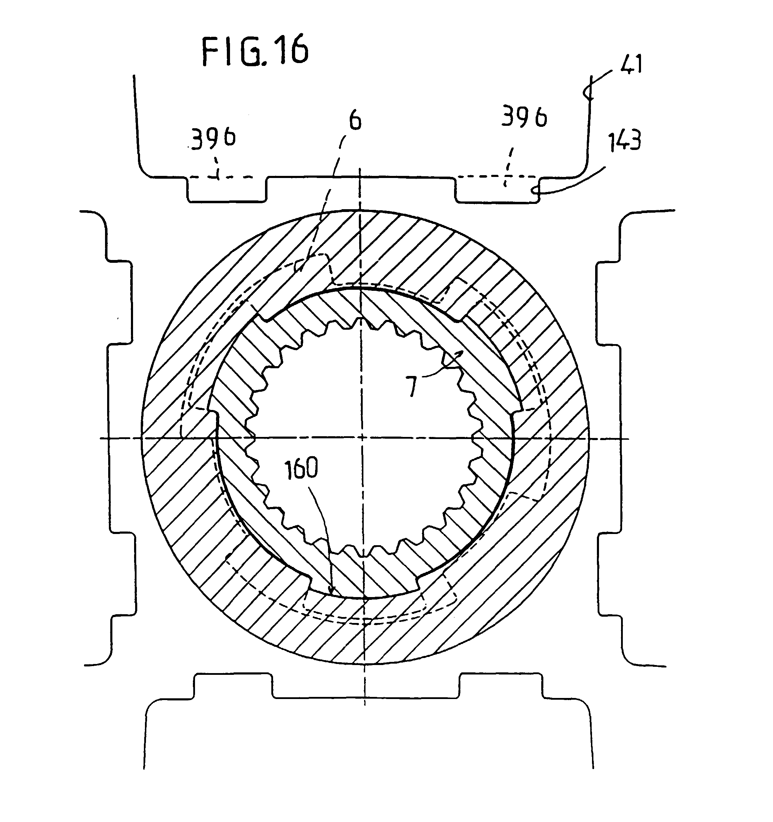

Ainsi dans les figures 15 et 16 le palier 91 a une forme analogue à celle de la figure 11 exempté le fait que sa couronne 192 est dirigée vers le voile 4 en étant en contact intime avec le moyeu 7.

Ainsi en considérant les parois 294,193 et 192 du palier 91 de forme annulaire, celui-ci a en section une forme en U dont les branches sont tournées vers le voile 4.

La paroi 295 présente des pions 396 plus épais car ceux-ci assurent la liaison en rotation du palier 91 avec le voile 4, les pions 396 peuvent être engagés à force dans les ouvertures 43. Le voile secondaire 201 est plus proche du voile 4.

Dans ce cas les bras 310 du voile 201 sont dirigés axialement pour servir d'appui de manière symétrique aux extrémités circonférentielles des ressorts 480,481 des figures 11 à 14.

Comme précédemment ce voile 201 est calé en rotation sur la première zone 73 par des moyens d'engrènement sans jeu 160 implantés radialement en dessous des moyens d'engrènement à jeu 6.

Le voile 201 n'est pas serti sur le moyeu 7 car il est retenu axialement, d'une part, par l'épaulement formé à la faveur du changement de diamètre existant entre la zone 73 de hauteur réduite et la zone 74 dans laquelle sont réalisés en partie les moyens d'engrènement à jeu 6, et, d'autre part, par la paroi 295 du palier 91 plus précisément par la face d'extrémité de la paroi 295 tournée vers le voile 4 et ce au niveau de la paroi 294.

En pratique une creusure est réalisée à cet endroit pour également centrer radialement le voile 201.

Ainsi on obtient une réduction des pièces et de l'encombrement axial puisque la couronne 192 est dirigée vers le voile 4.

On appréciera que dans toutes les solutions selon l'invention l'amortisseur présente en cascade un dispositif amortisseur principal comportant les ressorts 5, le voile 4, les rondelles de guidage 2,3 et un dispositif préamortisseur formé à la faveur du palier 91 permettant une réduction du nombre de pièces.

Dans tous les cas ce préamortisseur peut avoir des ressorts d'action étagée.

On notera que les pattes 202 de la figure 11 recouvrent avantageusement les pions 296 en sorte que le flasque 200 est agrafé au palier 91.

Il est donc possible de former un sous-ensemble comportant le palier 91 - le moyeu 7 - les ressorts 480,481 avec leurs coupelles et les entretoises et le flasque 200. Les pions 296 peuvent transmettre le couple et être donc en contact avec les bords circonférentiels des passages 143, en variante cette transmission de couple peut être effectuée par les pattes 202 coopérant alors avec le bord desdites ouvertures.

Bien entendu la présence des pattes 202 n'est pas nécessaire lorsque l'on ne veut pas former un sous-ensemble.

## Revendications

1. Amortisseur de torsion, notamment friction d'embrayage pour véhicule automobile, du genre comportant deux parties coaxiales montées mobiles l'une par rapport à l'autre à l'encontre de premiers organes élastiques à action circonférentielle (5), l'une des parties comportant un élément d'entrée (1), tel qu'un disque de support (1), solidaire de deux rondelles de guidage (2,3)reliées entre elles à fixation par des colonnettes (10), tandis que l'autre partie comporte un voile (4) et un élément de sortie (7), tel qu'un moyeu (7), montés mobiles l'un par rapport à l'autre à l'encontre de seconds organes élastiques à action circonférentielle (8), dits ressorts de faible raideur (8), de plus faible raideur que les dits premiers organes élastiques, avec intervention de moyens d'engrènement à jeu (6) limitant le débattement angulaire relatif entre le voile (4) et l'élément de sortie (7), dans lequel les rondelles de guidage (2,3) sont disposées de part et d'autre du voile (4) avec intervention de premiers moyens de frottement à action axiale (14,17,15) entre le voile (4) et l'une des rondelles de guidage (2,3), dite seconde rondelle de guidage, et de seconds moyens de frottement à action axiale (12, 13, 16) entre une bride de l'élément de sortie (7), dotée d'une denture engrenant à jeu avec une denture complémentaire du voile (4) pour formation des moyens d'engrènement à jeu (6), et la seconde rondelle de guidage (2,3), l'élément de sortie (7) présentant à sa périphérie externe, en saillie radiale vers l'extérieur, la bride (9) étagée comportant une première zone (73) et une deuxième zone (74) décalée axialement par rapport à la première zone (4) et portant à sa périphérie externe de manière continue la denture de l'élément de sortie (7) appartenant aux moyens d'engrènement à jeu (6), et dans lequel un palier (91) annulaire est calé en rotation sur le voile (4) en étant interposé, d'une part, radialement entre l'autre des rondelles de guidage (2), dite première rondelle de guidage (2) et l'élément de sortie (7), et, d'autre part, axialement entre le voile (4) et ladite première rondelle de guidage (2), le palier (91) présentant en allant de sa périphérie interne à sa périphérie externe respectivement une couronne (92,192) d'orientation axiale, une première paroi (93,193) globalement d'orientation transversale, une paroi (94,194,294) globalement d'orientation axiale, et une seconde paroi (95,195,295) globalement d'orientation transversale caractérisé en ce que les organes élastiques de faible raideur (8) sont logés au niveau de la première zone(73) de la bride étagée (9) dans des échancrures ouvertes (182, 282, 482) ménagées dans le palier (91) et en ce que lesdites échancrures sont réalisées au moins en partie dans la paroi (94, 194, 294) globalement d'orientation axiale du palier (91).

2. Amortisseur selon la revendication 1, dans lequel l'élément de sortie (7) consiste en un moyeu, caractérisé en ce que le moyeu (7) est réalisé par frittage.

3. Amortisseur selon la revendication 1 ou 2, caractérisé en ce que la seconde paroi d'orientation transversale (95,195,295) porte à sa périphérie externe des pions (96,196,296,396) engagés à force dans des ouvertures (43,143) du voile (4) pour liaison en rotation du palier (91) avec le voile (4) et pour formation d'un sous-ensemble comportant le voile (4), le palier (91) et les ressorts de faible raideur (8).

4. Amortisseur selon l'une quelconque des revendications précédentes, caractérisé en ce que la première paroi (93) est destinée à venir en contact avec la rondelle de guidage concernée pour frotter au contact de celle-ci.

5. Amortisseur selon l'une quelconque des revendications précédentes, caractérisé en ce que les échancrures (482) affectent également ladite première paroi (193).

6. Amortisseur selon l'une quelconque des revendications précédentes, caractérisé en ce que la couronne (92,192) est en contact intime avec la périphérie externe de l'élément de sortie (7), tandis que la périphérie externe de la paroi (294) globalement d'orientation axiale est en contact avec la périphérie interne d'un rebord annulaire d'orientation axiale (222), que présente la rondelle de guidage (2) concernée à sa périphérie interne.

7. Amortisseur selon la revendication 6, caractérisé en ce que la couronne (192) est dirigée axialement vers le voile (4) tout comme la paroi axiale (294) en sorte que le palier (91) présente une section en forme de U.

8. Amortisseur selon la revendication 7, caractérisé en ce que les organes élastiques de faible raideur consistent en des ressorts à boudin de forme courbe (480,481) montés en série entre deux bras (210) consécutifs appartenant à un voile secondaire (201) calé en rotation sur la première zone (73) de la bride (9).

9. Amortisseur selon la revendication 8, caractérisé en ce qu'une entretoise (485) intervient entre les deux ressorts (480,481) et en ce que les extrémités circonférentielles concernées desdits ressorts (480,481) s'appuient sur les bras (210) du voile secondaire (201) par l'intermédiaire de coupelles d'appui (381) à pions de centrage.

10. Amortisseur selon l'une quelconque des revendications 1 à 5, caractérisé en ce que les organes élastiques de faible raideur (8) sont logés dans des échancrures ouvertes (183,182-282,283) ménagées radialement en vis-à-vis dans la première zone (73) de la bride (9) et dans le palier (91).

11. Amortisseur selon la revendication 10, caractérisé en ce que les échancrures (182,282) de logement des organes élastiques de faible raideur (8) sont réalisées dans la paroi (94,194) d'orientation axiale du palier (91).

12. Amortisseur selon l'une quelconque des revendications la 11, caractérisé en ce que les échancrures (182,282) ont des longueurs différentes pour montage sans jeu circonférentiel d'une série de ressorts de faible raideur (8a) et avec jeu d'une autre série de ressorts de faible raideur (8b).

13. Amortisseur selon la revendication l'une quelconque des revendications 1 à 5, caractérisé en ce que l'extrémité dorsale de la couronne (92) du palier est de forme tronconique pour épouser la forme d'une paroi tronconique (72) délimitant la première zone (73) de la bride (9) du moyeu (7).

14. Amortisseur selon l'une quelconque des revendications 1 à 13, caractérisé en ce que les ressorts de faible raideur (8) sont implantés en partie radialement en dessous des moyens d'engrènement à jeu (6) en étant décalés axialement par rapport à ceux-ci, et en ce que la deuxième zone (74) s'étend en saillie vers l'extérieur par rapport à la première zone (73).

## Patentansprüche

1. Torsionsdämpfer, insbesondere Reibungskupplungsscheibe für Kraftfahrzeuge, umfassend zwei im Verhältnis zueinander beweglich entgegen ersten umfangsmäßig wirksamen elastischen Organen (5) gelagerte koaxiale Teile, wobei einer der Teile ein Eingangselement (1) umfaßt, etwa eine Trägerscheibe (1), die fest mit zwei Führungsscheiben (2, 3) verbunden ist, die durch Distanzbolzen (10) aneinander befestigt sind, während der andere Teil eine Zwischenscheibe (4) und ein Ausgangselement (7), etwa eine Nabe (7), umfaßt, die im Verhältnis zueinander beweglich entgegen als Federn mit geringer Steifigkeit (8) bezeichneten zweiten umfangsmäßig wirksamen elastischen Organen (8) mit geringerer Steifigkeit als die besagten ersten elastischen Organe gelagert sind, unter Einfügung von mit Spiel wirksamen Eingriffsmitteln (6), die die relative Winkelauslenkung zwischen der Zwischenscheibe (4) und dem Ausgangselement (7) begrenzen, wobei die Führungsscheiben (2, 3) beiderseits der Zwischenscheibe (4) angeordnet sind, unter Einfügung von ersten axial wirksamen Reibungsmitteln (14, 17, 15) zwischen der Zwischenscheibe (4) und einer der Führungsscheiben (2, 3), die als zweite Führungsscheibe bezeichnet wird, und von zweiten axial wirksamen Reibungsmitteln (12, 13, 16) zwischen einem Flansch des Ausgangselements (7), der mit einer Zahnung versehen ist, die mit Spiel an einer entsprechenden Zahnung der Zwischenscheibe (4) eingreift, um die mit Spiel wirksamen Eingriffsmittel (6) zu bilden, und der zweiten Führungsscheibe (2, 3), wobei das Ausgangselement (7) an seinem äußeren Umfang, radial nach außen vorstehend, den abgestuften Flansch (9) aufweist, der einen ersten Bereich (73) und einen zweiten Bereich (74) umfaßt, der im Verhältnis zum ersten Bereich (73) axial versetzt ist und an seinem äußeren Umfang durchgehend die Zahnung des Ausgangselements (7) trägt, die zu den mit Spiel wirksamen Eingriffsmitteln (6) gehört, und wobei ein ringförmiges Lager (91) drehfest an der Zwischenscheibe (4) angebracht und einerseits radial zwischen der als zweite Führungsscheibe (2) bezeichneten anderen der Führungsscheiben (2) und dem Ausgangselement (7) und andererseits axial zwischen der Zwischenscheibe (4) und der besagten anderen Führungsscheibe (2) eingefügt ist, wobei das Lager (91) von seinem inneren Umfang zu seinem äußeren Umfang einen axial ausgerichteten Kranz (92, 192), eine erste insgesamt quer ausgerichtete Wand (93, 193), eine insgesamt axial ausgerichtete Wand (94, 194, 294) und eine zweite insgesamt quer ausgerichtete Wand (95, 195, 295) aufweist, **dadurch gekennzeichnet**, daß die elastischen Organe mit geringer Steifigkeit (8) in Höhe des ersten Bereichs (73) des abgestuften Flansches (9) in offenen Aussparungen (182, 282, 482), die in das Lager (91) eingearbeitet sind, aufgenommen sind und daß die besagten Aussparungen wenigstens teilweise in der insgesamt axial ausgerichteten Wand (94, 194, 294) des Lagers (91) ausgeführt sind.

2. Dämpfer nach Anspruch 1, bei dem das Ausgangselement (7) aus einer Nabe besteht, **dadurch gekennzeichnet,** daß die Nabe (7) durch Sintern ausgeführt ist.

3. Dämpfer nach Anspruch 1 oder 2,**dadurch gekennzeichnet,** daß die zweite quer ausgerichtete Wand (95, 195, 295) an ihrem äußeren Umfang Stifte (96, 196, 296, 396) trägt, die fest in Öffnungen (43, 143) der Zwischenscheibe (4) eingesetzt sind, um die drehfeste Verbindung des Lagers (91) mit der Zwischenscheibe (4) herbeizuführen und eine Untergruppe zu bilden, die die Zwischenscheibe (4), das Lager (91) und die Federn mit geringer Steifigkeit (8) umfaßt.

4. Dämpfer nach einem der vorangehenden Ansprüche, **dadurch gekennzeichnet**, daß die erste Wand (93) dazu bestimmt ist, mit der betreffenden Führungsscheibe in Kontakt zu kommen, um in Kontakt mit dieser in Reibung zu treten.

5. Dämpfer nach einem der vorangehenden Ansprüche, **dadurch gekennzeichnet**, daß die Aussparungen (482) auch auf die besagte erste Wand (193) übergreifen.

6. Dämpfer nach einem der vorangehenden Ansprüche, **dadurch gekennzeichnet**, daß der Kranz (92, 192) in engem Kontakt mit dem äußeren Umfang des Ausgangselements (7) steht, während der äußere Umfang der insgesamt axial ausgerichteten Wand (294) in Kontakt mit dem inneren Umfang einer axial ausgerichteten ringförmigen Randleiste (222) steht, die die betreffende Führungsscheibe (2) an ihrem inneren Umfang aufweist.

7. Dämpfer nach Anspruch 6, **dadurch gekennzeichnet,** daß der Kranz (192) ebenso wie die axiale Wand (294) axial zur Zwischenscheibe (4) gerichtet ist, so daß das Lager (91) einen U-förmigen Querschnitt aufweist.

8. Dämpfer nach Anspruch 7, **dadurch gekennzeichnet,** daß die elastischen Organe mit geringer Steifigkeit aus Schraubenfedern mit gekrümmter Form (480, 481) bestehen, die hintereinander zwischen zwei aufeinanderfolgenden Armen (210) gelagert sind, die zu einer sekundären Zwischenscheibe (201) gehören, die drehfest am ersten Bereich (73) des Flansches (9) angebracht ist.

9. Dämpfer nach Anspruch 8, **dadurch gekennzeichnet,** daß ein Abstandsstück (485) zwischen den beiden Federn (480, 481) zum Einsatz kommt und daß die betreffenden Umfangsenden der besagten Federn (480, 481) auf den Armen (210) der sekundären Zwischenscheibe (201) über Auflageteller (381) mit Zentrierstiften aufliegen.

10. Dämpfer nach einem der Ansprüche 1 bis 5, **dadurch gekennzeichnet**, daß die elastischen Organe mit geringer Steifigkeit (8) in offenen Aussparungen (183, 182-282, 283) aufgenommen sind, die radial gegenüberliegend im ersten Bereich (73) des Flansches (9) und im Lager (91) ausgebildet sind.

11. Dämpfer nach Anspruch 10, **dadurch gekennzeichnet,** daß die Aussparungen (182, 282) zur Aufnahme der elastischen Organe mit geringer Steifigkeit (8) in die axial ausgerichtete Wand (94, 194) des Lagers (91) eingearbeitet sind.

12. Dämpfer nach Anspruch 11, **dadurch gekennzeichnet,** daß die Aussparungen (182, 282) unterschiedliche Längen für die ohne Umfangsspiel erfolgende Lagerung einer Reihe von Federn mit geringer Steifigkeit (8a) und für die mit Spiel erfolgende Lagerung einer anderen Reihe von Federn mit geringer Steifigkeit (8b) haben.

13. Dämpfer nach einem der Ansprüche 1 bis 5, **dadurch gekennzeichnet,** daß das rückseitige Ende des Kranzes (92) des Lagers eine kegelstumpfartige Form aufweist, um sich an die Form einer kegelstumpfartigen Wand (72) anzupassen, die den ersten Bereich (73) des Flansches (9) der Nabe (7) begrenzt.

14. Dämpfer nach einem der Ansprüche 1 bis 13, **dadurch gekennzeichnet**, daß die Federn mit geringer Steifigkeit (8) zum Teil radial unterhalb der mit Spiel wirksamen Eingriffsmittel (6) angeordnet sind, wobei sie im Verhältnis zu diesen axial versetzt sind, und daß sich der zweite Bereich (74) im Verhältnis zum ersten Bereich (73) nach außen vorstehend erstreckt.

## Claims

1. A torsion damper, in particular for a motor vehicle friction clutch, being of the kind comprising two coaxial parts which are mounted for movement of one with respect to the other against the action of first circumferentially acting resilient members (5), with one of the parts comprising an input element (1) such as a support disc (1), fixed to two guide rings (2, 3) which are secured together by means of connecting posts (10), while the other part comprises a damper plate (4) and an output element (7) such as a hub (7), which are mounted for movement of one with respect to the other against the action of circumferentially acting second resilient members (8) in the form of springs (8) of low stiffness, having a stiffness lower than that of the said first resilient members, with loose coupling means (6) being operatively interposed for limiting the relative angular displacement between the damper plate (4) and the output element (7), wherein the guide rings (2, 3) are disposed on either side of the damper plate (4), with first axially acting friction means (14, 17, 15) being operatively interposed between the damper plate (4) and one of the guide rings (2, 3), namely a second guide ring, and with second axially acting friction means (12, 13, 16) being operatively interposed between a flange of the output element (7), which has a set of teeth meshing loosely with a complementary set of teeth of the damper plate (4) so as to constitute the loose coupling means (6), and the second guide ring (2, 3), the output element (7) having at its outer periphery and projecting radially outwards, the flange (9), which is stepped and which comprises a first zone (73) and a second zone (74) which is offset axially with respect to the first zone (73) and carries at its outer periphery the continuous set of teeth of the output element (7) constituting part of the loose coupling means (6), and wherein an annular bearing (91) is mounted in rotation on the damper plate (4), being interposed firstly, radially between the other one (2) of the guide rings, being a first guide ring (2), and the output element (7), and secondly, axially between the damper plate (4) and the said first guide ring (2), the bearing (91) having, going from its inner periphery to its outer periphery respectively, an axially orientated crown portion (92, 192), a first wall portion (93, 193) which is orientated generally transversely, a generally axially orientated wall portion (94, 194, 294), and a generally transversely orientated second wall portion (95, 195, 295), characterised in that the low stiffness resilient members (8) are mounted in the region of the first zone (73) of the stepped flange (9), in open notches (182, 282, 482) formed in the bearing (91), and in that the said notches are formed at least partly in the generally axially orientated wall portion (94, 194, 294) of the bearing (91).

2. A damper according to Claim 1, in which the output element (7) consists of a hub, characterised in that the hub (7) is formed by sintering.

3. A damper according to Claim 1 or Claim 2,
characterised in that the transversely orientated second wall portion (95, 195, 295) carries at its outer periphery spigots (96, 196, 296, 396) which are force-fitted in apertures (43, 143) in the damper plate (4) so as to couple the bearing (91) with the damper plate (4) for rotation therewith and to constitute a subassembly consisting of the damper plate (4), the bearing (91) and the low stiffness springs (8).

4. A damper according to any one of the preceding Claims, characterised in that the first wall portion (93) is adapted to come into contact with the appropriate guide ring so as to make frictional contact with the latter.

5. A damper according to any one of the preceding Claims, characterised in that the notches (482) are formed also in the said first wall portion (193).

6. A damper according to any one of the preceding Claims, characterised in that the crown portion (92, 192) is in intimate contact with the outer periphery of the output element (7), while the outer periphery of the generally axially orientated wall portion (294) is in contact with the inner periphery of an axially orientated annular flange (222) which is formed on the appropriate guide ring (2) at its inner periphery.

7. A damper according to Claim 6, characterised in that the crown portion (192) is directed axially towards the damper plate (4), as is the axial wall portion (294), so that the bearing (91) has a U-shaped cross section.

8. A damper according to Claim 7, characterised in that the low stiffness resilient members consist of coil springs (480, 481) having a curved form, which are mounted in series between two consecutive arms (210) of a secondary damper plate (201) that is mounted in rotation on the first zone (73) of the flange (9).

9. A damper according to Claim 8, characterised in that a spacer (485) is interposed operatively between the two springs (480, 481), and in that the appropriate circumferential ends of the said springs (480, 481) bear on the arms (210) of the secondary damper plate (201) through interposed thrust inserts (381) with centring spigots.

10. A damper according to any one of Claims 1 to 5, characterised in that the low stiffness resilient members (8) are lodged in open notches (183, 182; 282, 283) which are formed radially in facing relationship in the first zone (73) of the flange (9) and in the bearing (91).

11. A damper according to Claim 10, characterised in that the notches (182, 282) for accommodating the low stiffness resilient springs (8) are formed in the axially orientated wall portion (94, 194) of the bearing (91).

12. A damper according to any one of Claims 1 to 11, characterised in that the notches (182, 282) are of different lengths, for mounting a set of low stiffness springs (8a) therein without any circumferential clearance, and for mounting a further set of low stiffness springs (8b) with a clearance.

13. A damper according to any one of Claims 1 to 5, characterised in that the dorsal end of the crown portion (92) of the bearing is of frusto-conical form, so as to match the form of a frusto-conical wall portion (72) bounding the first zone (73) of the flange (9) of the hub (7).

14. A damper according to any one of Claims 1 to 13, characterised in that the low stiffness springs (8) are fitted partly radially inwards of the loose coupling means (6), being offset axially with respect to the latter, and in that the second zone (74) projects outwards with respect to the first zone (73).
